# EUROPEAN PATENT SPECIFICATION

(11) **EP 0 483 299 B1**
(45) Date of publication and mention of the grant of the patent: **01.07.1998**
(21) Application number: 91906026.9
(22) Date of filing: 18.01.1991
(51) Int. Cl.: G06K 9/36

(54) **IMAGE PATTERN EXTRACTION**
BILDMUSTERGEWINNUNG
EXTRACTION DE STRUCTURES D'IMAGES

(30) Priority: 22.01.1990 US 468097
(43) Date of publication of application: 06.05.1992
(73) Proprietor: GOUGE, James O., Snellville, GA 30278 (US)
(72) Inventor: GOUGE, James O., Snellville, GA 30278 (US)
(74) Representative: Ede, Eric
(86) International application number: US9100441
(87) International publication number: WO9110970

(56) References cited:
- EP-A- 0 294 716
- JP-A- 5 659 374
- US-A- 3 587 046
- US-A- 4 872 203
- US-A- 4 953 228

## Description

### BACKGROUND OF THE INVENTION

### 1. Field of the Invention

This invention relates generally to a method and apparatus for extracting information from the gray scale image containing "back scatter" energy generated by a focused beam of energy (ultrasound, radar, sonar) striking an echoic surface target. The ultrasound imaging of such as human tissue to recognize and identify the resultant echoic characteristics of the target. Specifically the invention relates to a method and apparatus for inexpensively extracting significant image information based on edges, lines, contours and geometrical shapes from an image containing back scatter image patterns in real time.

### 2. Description of the Prior Art

The use of ultrasonic energy producing echoic information concerning the health and well being of body organs and tissues is well known. Gray scale echography which provides characteristics of tissue texture in a visual image display representative of tissue and cell differences due to disease or lesions is also known. A beam of focused ultrasonic energy on a tissue target produces parameters with respect to the tissue including attenuation and back scattering. A complete discussion of texture and tissue echograms can be found in the Journal of Ultrasound Medicine Volume 9, pages 215-229, 1990.

The present invention deals with echoic back-scatter information as well as geometric line and shape information which are contained in a processed image in a visual x and y coordinate system on a cathode ray tube as a function of visually reproduced pixels. In particular, computerized image processing and visual image processing including pattern extraction and recognition is known. U.S. Patent 4,769,850 issued to Itoh et al September 6, 1988 shows an apparatus for extracting circular and linear components in a complex computerized image. Likewise U.S. Patent 4,866,783 issued to Ohyama September 12, 1989 shows a system for detecting edges of an image which includes a scanning circuit and other components for evaluating the image. U.S. Patent 4,817,171 issued to Stentiford March 28, 1989 shows a pattern recognition system for syntactic decision processing.

U.S. Patent 4,908,872 issued to Toriu et al March 13, 1990 shows a method and apparatus for extracting contour lines from a pattern obtained in image processing using vector gradients for comparing gray level gradients among adjacent pixels. To date, the primary problem with the prior art systems are the mathematical complexity and the time and computing power required for extracting relevant image information cost effectively in real time. Using current image processing methods, geometric pattern extraction and recognition is extremely complex and a multi-step mathematical process which requires the power of a super computer to process images in real time.

With respect to the ultrasonic imaging of target tissue, the interaction between the "back scatter" and the primary returning energy causes variations in the intensity of the primary returning energy which shows up in the resultant image as a textured surface with gray scale brightness differences represented by the pixel array relating to the relative intensity of the returning energy from the target at specific x and y positions. The present invention, for example, can be used for example to analyze an image produced by the ultrasonic scanning of a thin, planar area of tissue located within the focal length of the ultrasonic emitter. The invention analyzes the multidimensional patterns contained in the back scatter and the geometrical lines and shapes, i.e. geometrical patterns; all of which are contained in the image produced by the scanning energy beam. Topographical variations appear as the gray scale pixel luminence intensity variations distributed across the image area presented.

The present invention discloses a method and apparatus using personal sized computers such as an IBM PC, to provide real time image analysis and evaluation to discern relevant information patterns in the back scatter component of the image for differentiating cells and tissues which heretofore were not discernible without a super computer or invasive surgery accomplished at a resolution level to ensure the reliability of the procedure.

The present invention provides a less complex technique for complex image processing by a novel examination of predetermined target pixel radials extending from the target pixel for analysis of surrounding pixel gray scale value variations between the target pixel and neighboring near and far pixels surrounding the target pixel.

US-A-4 872 203 and EP-A-0 294 716 discloses sampling of a finger print image at radials starting from a target pixel and performing computations on the basis of the gray values of the pixels in these radials.

### BRIEF SUMMARY OF THE INVENTION

The invention described herein, which is defined in claims 1, 4, 7 and 9, is a method and apparatus for evaluating back scatter energy components contained in images which form complex image patterns by examining near and far pixels surrounding a target pixel radially as a function of edges, lines and contours relative to radial pixels and their gray scale values. Use of this information is then employed for line extraction, shape extraction and shape recognition through the use of resultant accumulated bit strings relating to the pixel edges, lines and contours around the target pixel as a function of various derivative bit string information. The resultant bit string information can then be compared with an accumulated data base of back scatter patterns to produce useful distinctions between critical areas of cells and tissue differences within a target group.

It is an object of this invention to provide an image processing method for edge, line and contour pattern extraction from a complex image containing back scatter patterns in real time using a "small" personal computer.

It is another object of this invention to provide image and pattern recognition in a complex image in a cost effective apparatus and method.

Yet another object of this invention is to provide for extracting of information from back scatter energy intensity variations produced by a beam of ultrasonic energy scanning tissue cells for tissue evaluation in a non-complex, cost-effective, real time process and apparatus.

According to one aspect of the present invention there is provided an image processing method for extracting local pattern information comprising the steps of:
bombarding an irregular surface with a focused beam of ultrasonic energy to obtain a return echo;
generating a pixel image containing back scatter energy from the echo;
selecting a target pixel relating to a target image to be evaluated;
selecting a first group of pixels directly surrounding said target pixel;
selecting a second group of pixels surrounding contiguously said first group of pixels;
assigning one or more radials from said target pixel through at least one pixel of said first group and continuously through at least one pixel of said second group;
determining the pixel gray scale values along each radial in group one and group two to determine the number of edges along each radial;
providing a bit string value based on the number of edges in each radial; and
accumulating all of the radial bit string values into an accumulated string of bits relating to the radial shape of the edges.

According to a second aspect of the present invention there is provided an image processing method for extracting local pattern information comprising the steps of:
bombarding an irregular surface with a focused beam of ultrasonic energy to obtain a return echo;
generating a pixel image containing back scatter energy from the echo;
selecting a target pixel relating to a target image to be evaluated;
delineating matched pairs of colinear radials originating from said target pixel, each said radial being at least three pixels in length;
determining the gray scale pixel differences between each pair of colinear radials as an absolute numerical value; and
accumulating the total gray scale differences for all radial pairs to ascertain the total gray scale pixel asymmetry surrounding said target pixel relating to the asymmetry of the echo image pattern around the target pixel.

According to a third aspect of the present invention there is provided an image processing method for extracting local pattern information comprising the steps of:
bombarding an irregular surface with a focused beam of ultrasonic energy to obtain a return echo;
generating a pixel image containing back scatter energy from the echo;
selecting a target pixel relating to a target image to be evaluated;
selecting a plurality of target radial pixels emanating from the target pixel;
determining a radial with an average pixel gray scale value within a predetermined value relative to said target pixel gray scale value along said radial;
assigning a bit value to each pixel located in said line as determined along said radial;
locating the end of a line by detecting a change in direction of said line above 89°; and
accumulating a bit string for said line evaluation.

According to a fourth aspect of the present invention there is provided an apparatus for the extraction of pattern recognition information from a pixel image containing back scatter energy produced by a focused beam of energy (radar, sonar, ultrasonic, laser) emitted against a target such as human tissue to extract characteristic information concerning tissue being targeted, the apparatus comprising:
means for generating a beam of ultrasonic energy;
means for evaluating back scatter of said energy from a target as a function of the pixel gray scale values in a visual pixel array;
means for generating a pixel array pattern in X and Y coordinates as a function of back scatter intensity energy received from a specific target illuminated with a focused beam of energy;
means for selecting a target pixel in said image pattern;
means for selecting predetermined radials relative to said target pixel;
means for determining the pixel gray scale values along each radial relative to said target pixel and pixels surrounding said target pixels to determine the number of edges along each radial; and
means for providing bit string values based on the number of edges in each radial and accumulating all the radial bit string values into an accumulated string of bits relating to the radial shape of the edges.

In accordance with these and other objects which will be apparent hereinafter, the instant invention will now be described with particular reference to the accompanying drawings.

### BRIEF DESCRIPTION OF THE DRAWINGS

Figure 1 shows a schematic diagram of back scatter energy from a focused beam of energy striking an irregular echoic surface.

Figure 2 shows a diagram of near and far neighboring pixels surrounding a target pixel from an image for radial examination of particular near and far neighboring pixels.

Figure 3 shows a diagram of the gray scale value for the target pixel for the radials defined in Figure 2 showing edges found along each radial.

Figure 4 shows a flow diagram for radial shape extraction used in the present invention.

Figure 5 shows a diagram of the resultant accumulated bit string utilizing the radial shape process for the target and neighboring pixel patterns shown in Figures 3 and 4.

Figure 6 shows a flow diagram for radial contour extraction utilized in the present invention.

Figure 7 shows radial contour calculation diagram relating to the flow diagram of Figure 6.

Figure 8 shows flow diagram for radial asymmetry extraction utilized in the present invention.

Figure 9 shows radial asymmetry calculation diagram for the flow diagram of Figure 8 including the resultant accumulated differences.

Figure 10 shows the flow diagram for the radial gradient extraction used in the present invention.

Figure 11 shows a radial gradient calculation diagram related to the flow diagram of Figure 10.

Figure 12 shows the flow diagram for line acquisition to locate the beginning of a line in an image.

Figure 13 shows a line following flow diagram to follow a line in an image and measure the line length and number of changes in direction contained in the line wherein each change in direction must be less than ninety degrees.

Figure 14 shows the second part of the flow diagram contained in Figure 13 related to line extraction.

Figure 15 shows two contiguous lines in an image for line extraction pixel evaluation for line extraction.

Figure 16 shows line extraction calculations related to Figures 12, 13, 14 and 15.

Figure 17 shows a flow diagram for geometric shape extraction utilized in the present invention to encode the geometric shape into a set of bit strings describing the number of direction changes for each line and the length of each line contained in the geometric shape.

Figure 18 shows a pixel diagram of a circle.

Figure 19 shows a circle shape calculation diagram for processing each pixel contained in the perimeter of a circle shown in Figure 18 by geometric shape extraction and the resultant accumulated bit string.

Figure 20 shows a square shape pixel diagram.

Figure 21 shows a square shape calculation diagram based on the diagram shown in Figure 20 for a geometric shape extraction and resultant accumulated bit strings.

Figure 22 shows a triangular shape pixel diagram.

Figure 23 shows the pixel processing triangular shape calculation diagram for pixel processing of the diagram shown in Figure 22 and the resultant accumulated bit strings.

Figure 24 shows a schematic diagram of a geometric shape recognition knowledge tree utilizing circular, triangular and square pixel images for storage in a knowledge base.

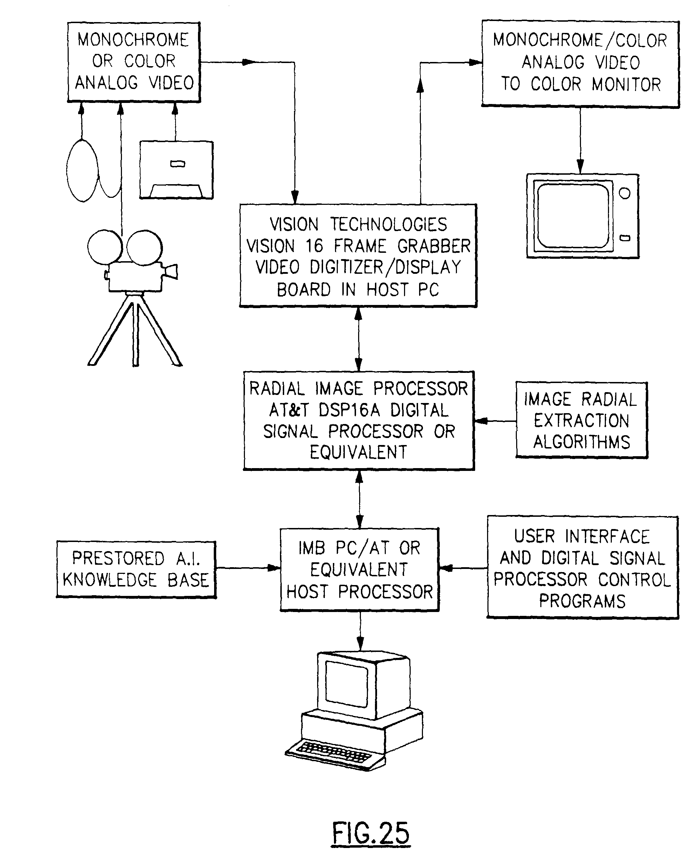

Figure 25 is a schematic diagram of a system using applicant's invention.

### DESCRIPTION OF THE PREFERRED EMBODIMENT OF THE INVENTION

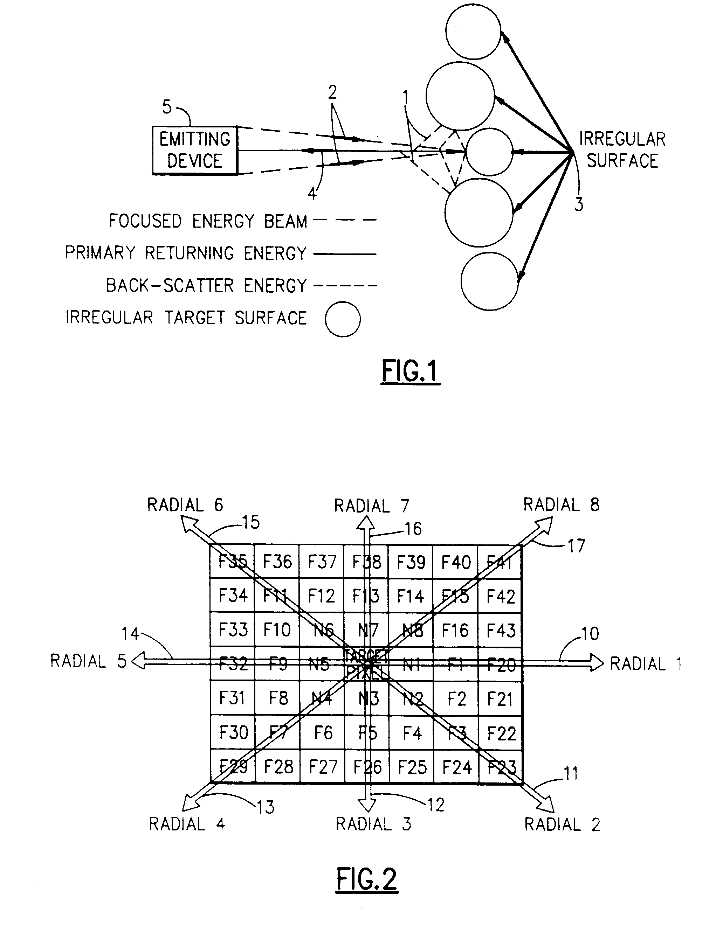

Referring now to the drawings, Figure 1 shows a schematic diagram which has an ultrasonic emitting device probe 5 which bombards the irregular surface 3 (which could be tissue) to obtain a return echo of intensity 4 based on the direct beam of energy 2 striking the target causing an interaction of the reflected energy 1 with the returning beam 2. Although the returning energy based on the interaction between the back scatter (produced by the irregular surface) and the primary returning energy is not predictable, it is repeatable when compared so that processing the image based on the intensity levels related by gray scale pixel values produce useful information regarding the target surface. The purpose of the invention is to process the returning energy to provide useful information relating to the characteristics of the target tissue.

Referring now to Figure 2 the center target pixel surrounded by a first layer of pixels N1-N8 representing near neighbor pixels and two additional outer groupings of pixels surrounding in a second and third tier level from the target pixel represented by F1-F43. In utilizing the present invention a plurality of imaginary radials 1-8 and 10-17 are selected which will be used in evaluation of the surrounding near and far neighboring pixels. These are the groups of pixels to be processed in accordance with the present invention.

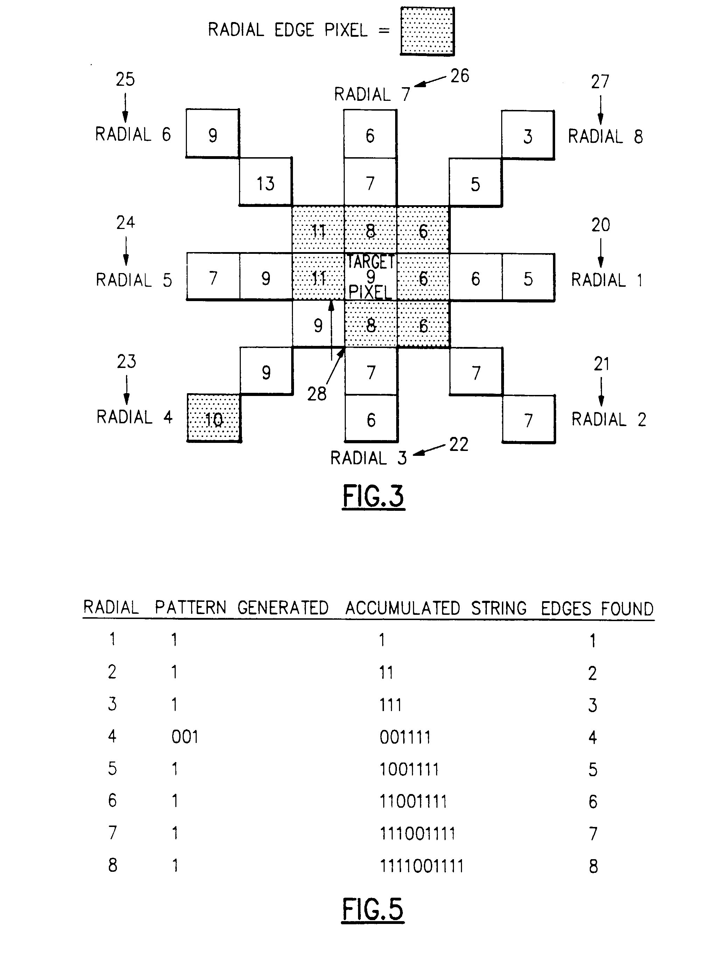

Figure 3 shows an example of a plurality of pixels along the radial selected, each having numerical values relating to their gray scale value. The target pixel has an arbitrarily selected numerical gray scale value of 9. The purpose of this diagram is for explanation purposes only; it does not represent any true or absolute values to be found in analyzing back scatter. An edge is defined as a difference in gray scale value between the target pixel and the near or far neighboring pixels along the radial selected.

### "RADIAL SHAPE EXTRACTION"

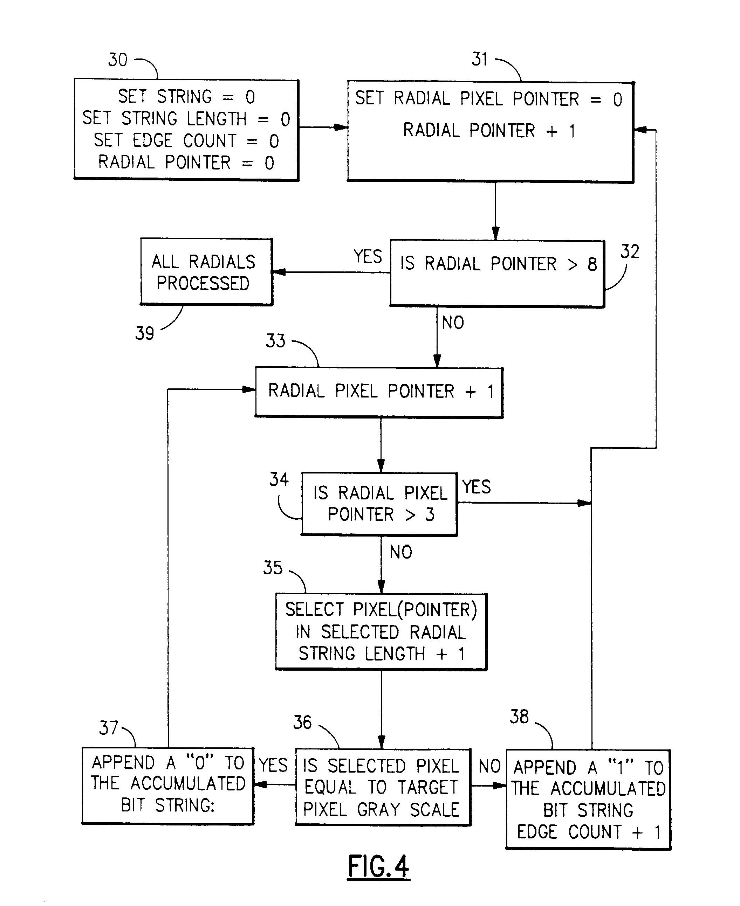

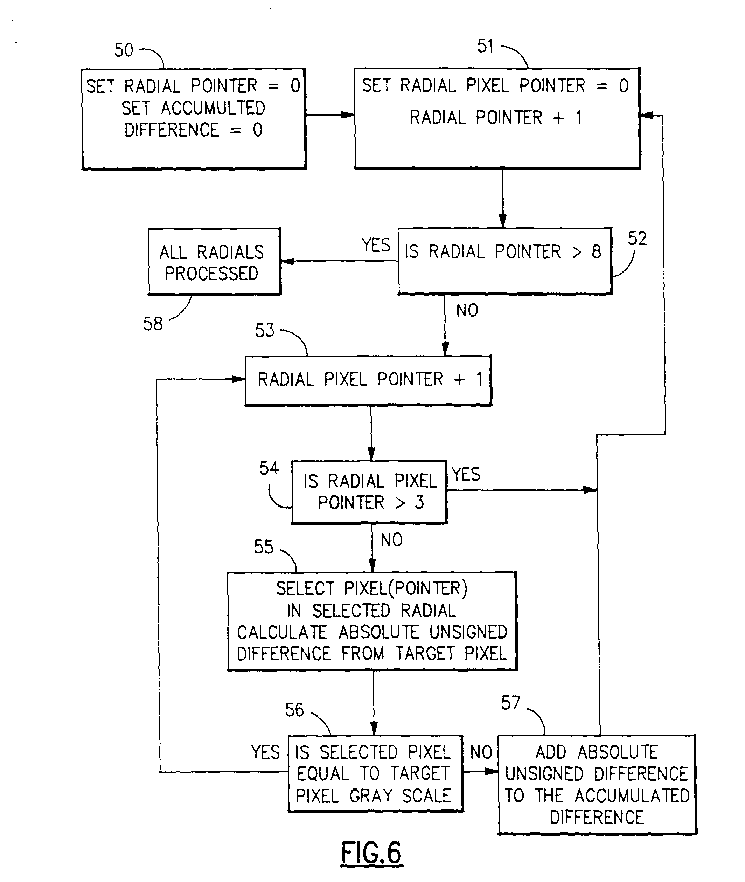

Figure 3 shows a group of pixels from an image generated by one of the aforementioned imaging systems. The "Radial Shape Extraction" algorithm (Figure 4) evaluates the NEAR and FAR neighboring pixels along the imaginary radials extending from the target pixel. The NEAR neighbors are the pixels directly adjacent to the target pixel. The FAR neighbors are the second and third ring of pixels surrounding the target (see Figure 2). The algorithm shown in Figure 4 searches each radial for an edge; i.e. a difference in gray scale value between the target pixel and the near and/or far neighbors along the radial selected (see Figure 4 #30-37). Each edge position relative to the target is noted as a bit string which is appended to an accumulated string of bits (see Figure 4 #38). Processing each of the eight radials (see Figure 4 #32) as shown in all of Figure 4 creates an accumulated string of bits analogous to the "RADIAL SHAPE" of the edges. These edges in all the radials could be considered as dots in a "connect the dots to form a shape" child's puzzle. Sequential processing by the algorithm shown in Figure 4, of each radial shown in Figure 3, results in the bit string sequence shown in Figure 5.

### "RADIAL SPATIAL DISTRIBUTION EXTRACTION"

The "Radial Spatial Distribution Extraction" algorithm measures the general distribution of the edges found in the near and far pixels surrounding and in reference to the target pixel. This is accomplished by simply counting the number of "0's" in the bit string generated by the "Radial Shape Extraction" algorithm. These zeroes are analogous to the distance of the edges from the target pixel. A number from 0 to 24 is calculated as an indication of the distribution and complexity of the pattern of the edges produced by the "Back Scatter". The larger the number calculated, the more widely distributed the edges; ergo, a smaller number represents a smaller "Spatial Distribution" of edges. The "Spatial Distribution" of the edge pattern produced by the "Back Scatter" is directly related to the echoic surface topography of the target being imaged.

The bit string generated by the "Radial Shape Extraction" algorithm in Figure 5 contains eight "1" bits and two "0" bits; therefore, said bit string has a "Radial Spatial Distribution" of two.

### "RADIAL CONTOUR EXTRACTION"

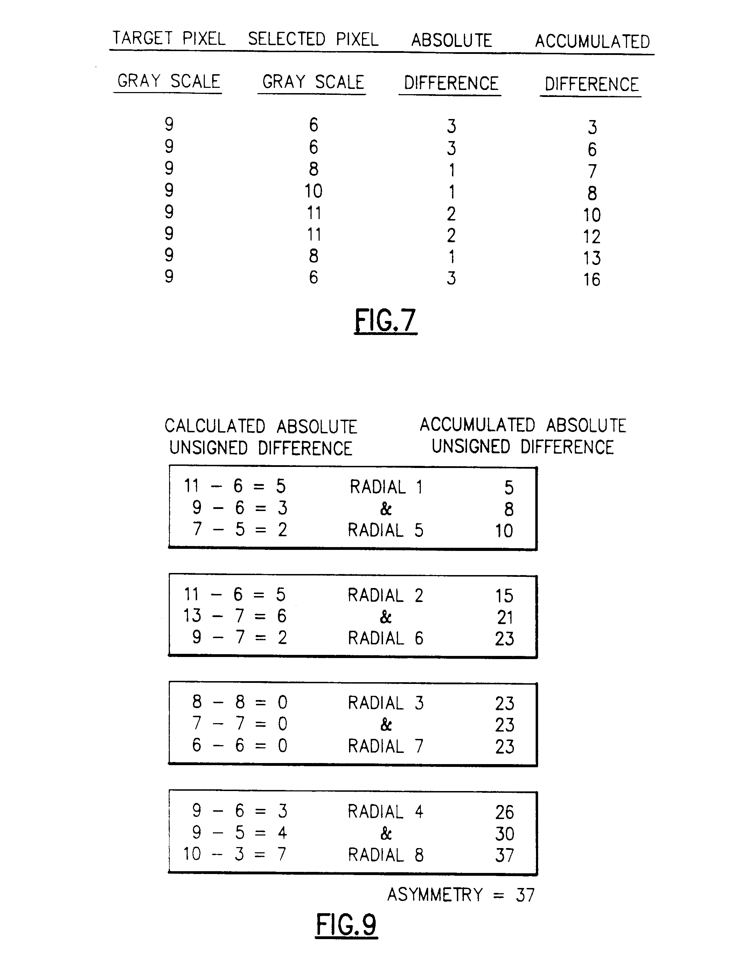

The "Radial Contour Extraction" algorithm measures the delta (change) in the edges identified by the "Radial Shape Extraction" algorithm. The edge delta is related to the echoic homogeneity of the target being imaged. This is accomplished by calculating the accumulated variations in edge pixel values shown in Figure 3 using the algorithm shown in Figure 6 #50-58. This produces a number from 0 to 248 in an image based on 32 gray scales (i.e. 0 = black, 31 = white). The lower the number, the MORE homogeneous the target is; ergo, the larger the number, the LESS homogeneous the target is. Figure 7 shows the "Radial Contour Extraction" calculation diagram for the pixels identified in Figure 3 by the "Radial Shape Extrication" algorithm. As shown in the calculation diagram in Figure 7, the accumulated difference is 16, a number indicating echoic homogeneity.

### "RADIAL ASYMMETRY EXTRACTION"

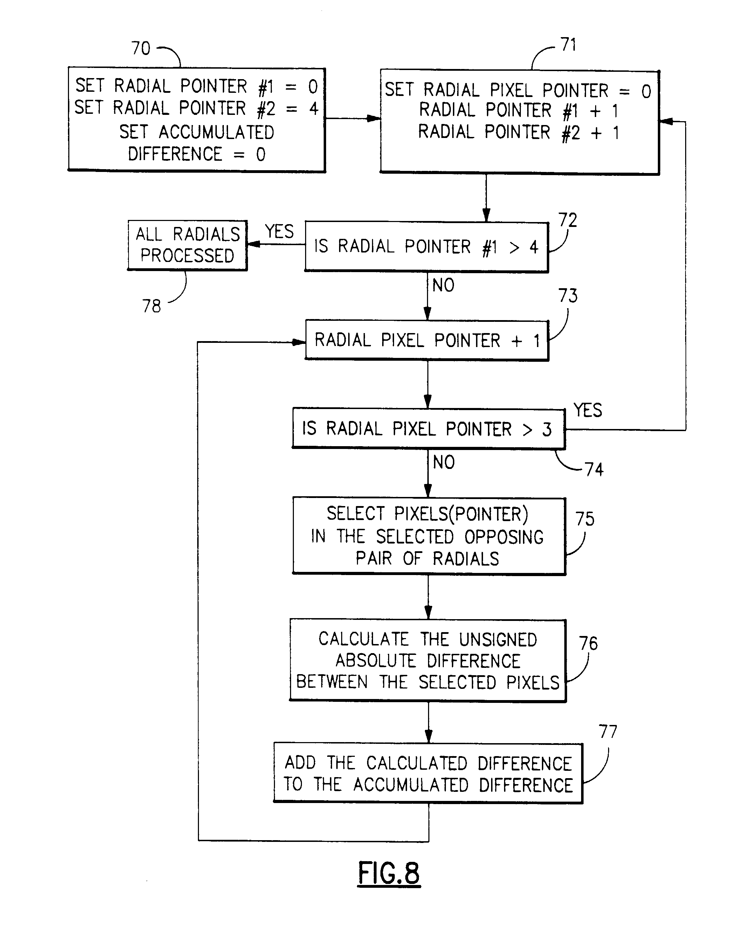

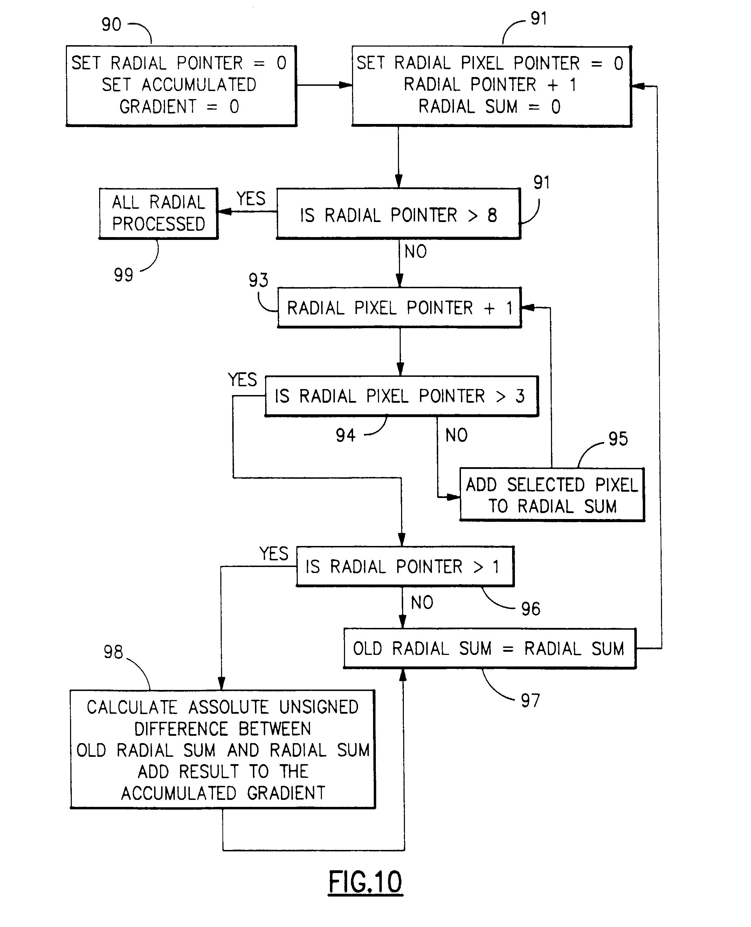

The "Radial Asymmetry Extraction" algorithm shown in Figure 8 #70-77 measures the asymmetry between opposing imaginary radial pairs extending from the target pixel. The algorithm assumes eight imaginary radials of pixels extending from the target pixel much like spokes in a wheel (see Figure 2 #10-17). Each radial is three pixels in length (see Figure 3 #20-27). The gray scale value of the pixels along the radials is compared with that of their counterparts and the differences are accumulated for all four radial pairs as illustrated in the "Radial Asymmetry Calculation Diagram" shown in Figure 9. This process produces a number analogous to the overall asymmetry of the pixels surrounding the target pixel and is an abstract measure of the echoic asymmetry of the target being imaged.

### "RADIAL GRADIENT EXTRACTION"

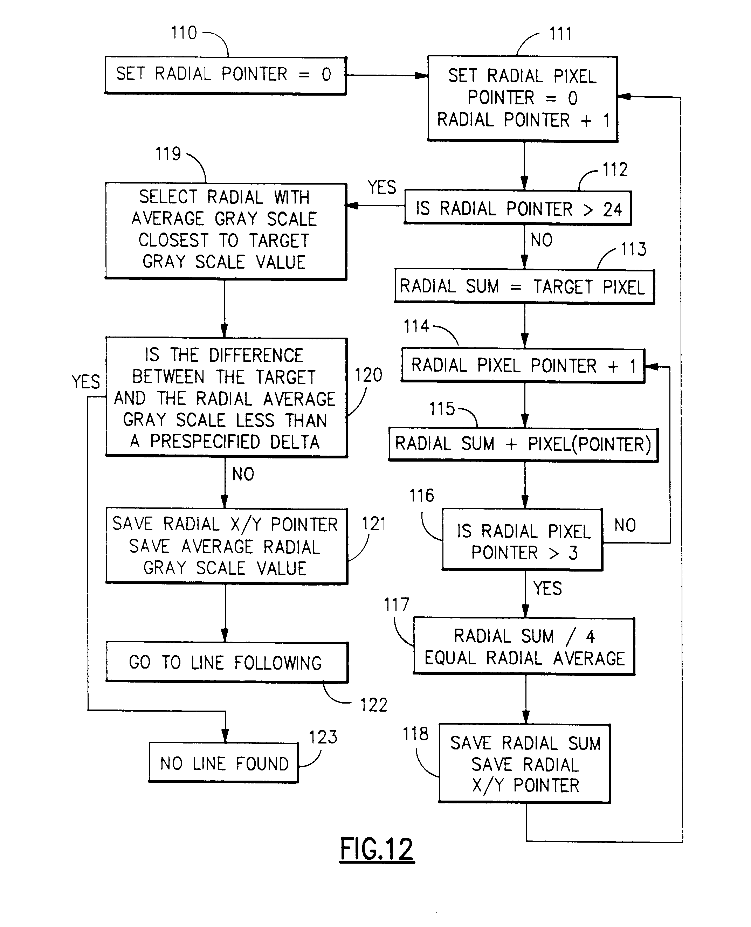

The "Radial Gradient Extraction" algorithm measures the delta (change) in gray scale from radial to radial. This algorithm assumes eight imaginary radials of pixels extending from the target pixel much like spokes in a wheel (see Figure 2 #10-17). Each radial is three pixels in length (see Figure 3 #20-27). The purpose of this algorithm is to measure gradual changes in echogenicity as the target being imaged is scanned by the energy beam without the need to take into consideration the scanning axis. The steps by which to measure these changes are shown in the flow diagram for the "Radial Gradient Extraction" algorithm in Figure 10 #90-99. Figure 11 is an example of a gradient value obtained from the gray scale values of pixels along the eight imaginary radials given in Figure 3.

### "LINE EXTRACTION"

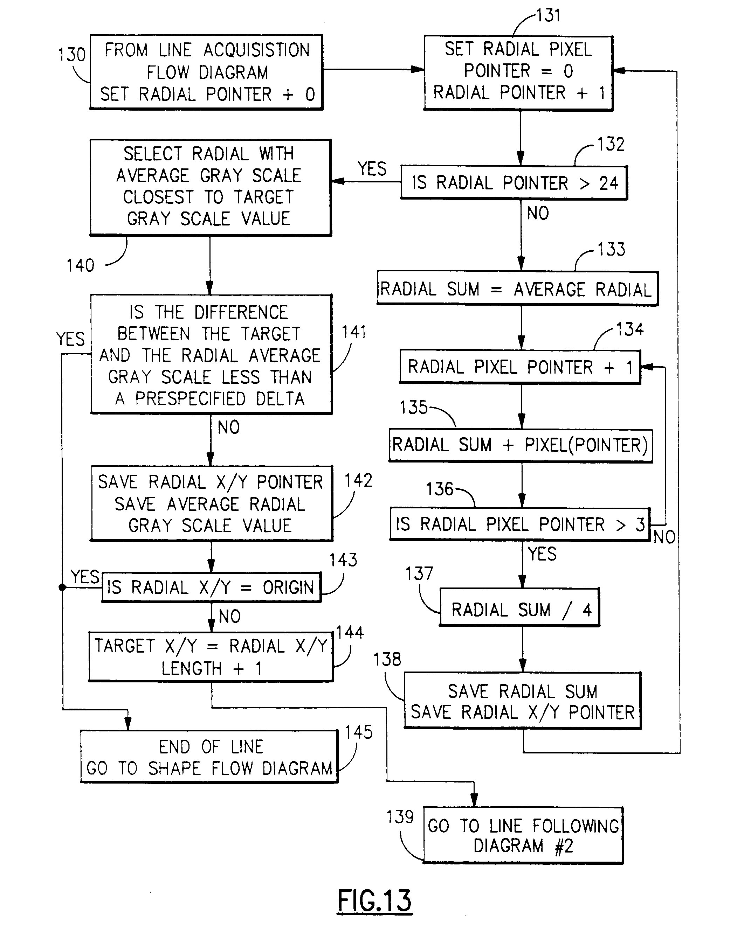

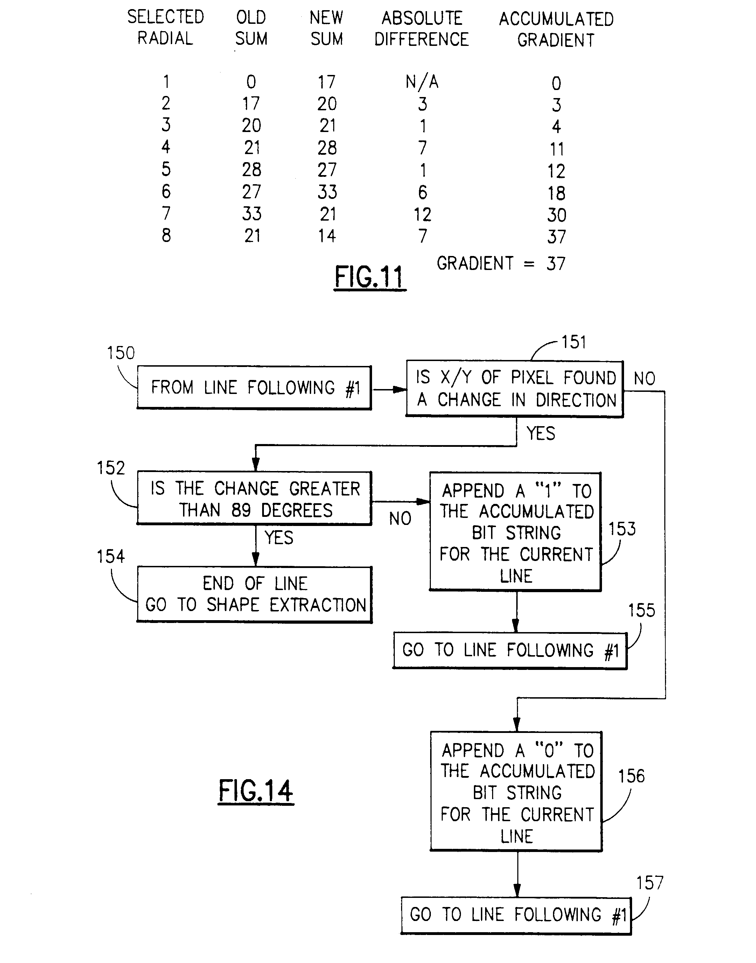

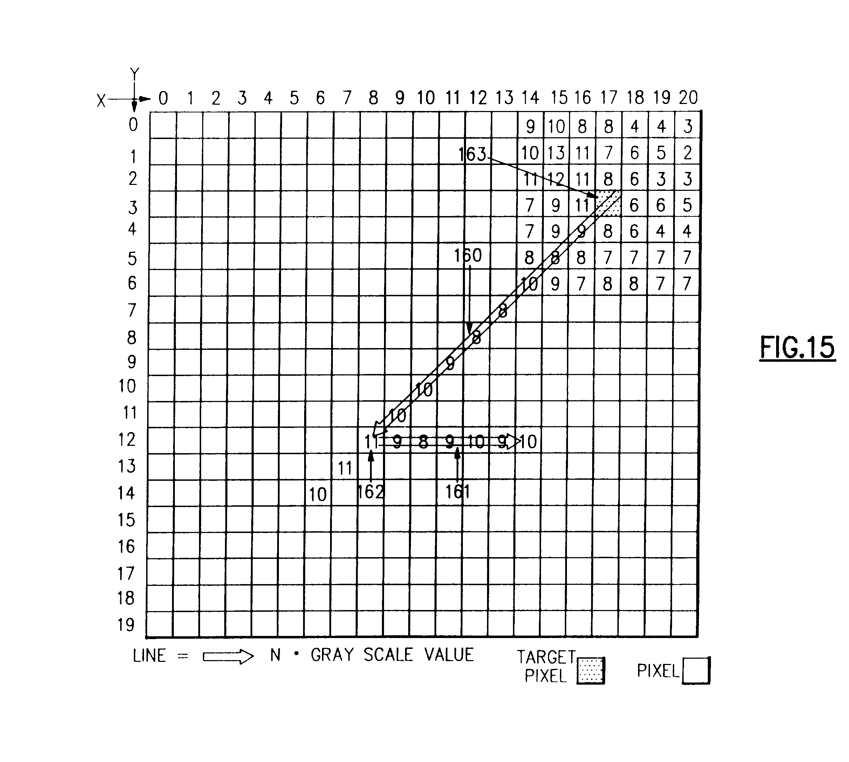

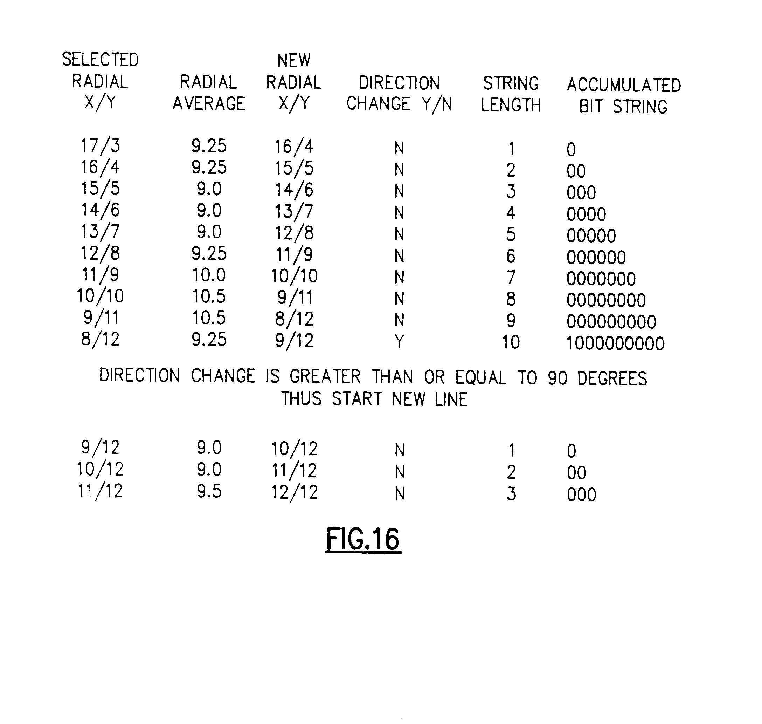

The "Line Extraction" algorithm evaluates edges extending from the target pixel in any direction which form a progressive set of contiguous edges. The end of the line is the point at which the contiguous edges change direction 90 degrees or more. This algorithm has been included in 3 Figures 12-14 to facilitate the steps necessary to ascertain the beginning of a line (Figure 14 #110-123), and, if a line is found (Figure 13 #130-145), to follow the line to determine if any changes in direction greater than 89 degrees have occurred; thus indicating the end of the line (Figure 13 #150-157). An example of "Line Extraction" is shown in the "Line Extraction Pixel Diagram" in Figure 15 #160-163 wherein the beginning and ending of the line #160 is shown to be pixel x-17, y-3 (the target pixel) and pixel x-8, y-12, the pixel at which a change of direction greater than 89 degree takes place. A new line begins at #162 and continues on as line #161 in the direction of the arrow to end at pixel x-14, y-12. Using the "Line Extraction" algorithm, a square would then have 4 lines resulting from 4 changes in direction of 90 degrees or greater while a circle would be comprised of only one line based upon changes in direction of less than 90 degrees. Specifically, the algorithm creates a string of bits, where each bit represents each pixel contained in the line. As shown in the actual "Line Extraction Calculation Diagram" in Figure 16, the string of bits contains "zeros" where no change in direction from pixel to pixel has occurred and "ones" where a change in direction has occurred. Two numbers result from these calculations: the first is the length of the line, i.e. the number of pixels contained in the line which is designated as "String Length" in Figure 16; and the second, the number of changes in direction in the line, i.e. the number of "ones" in the bit string (see Figure 16, column 6). When these numbers and bit strings are used to form a "Geometric Knowledge Base", the numbers facilitate fast searches of this Knowledge Base for possible pattern match candidates.

### "GEOMETRIC SHAPE EXTRACTION"

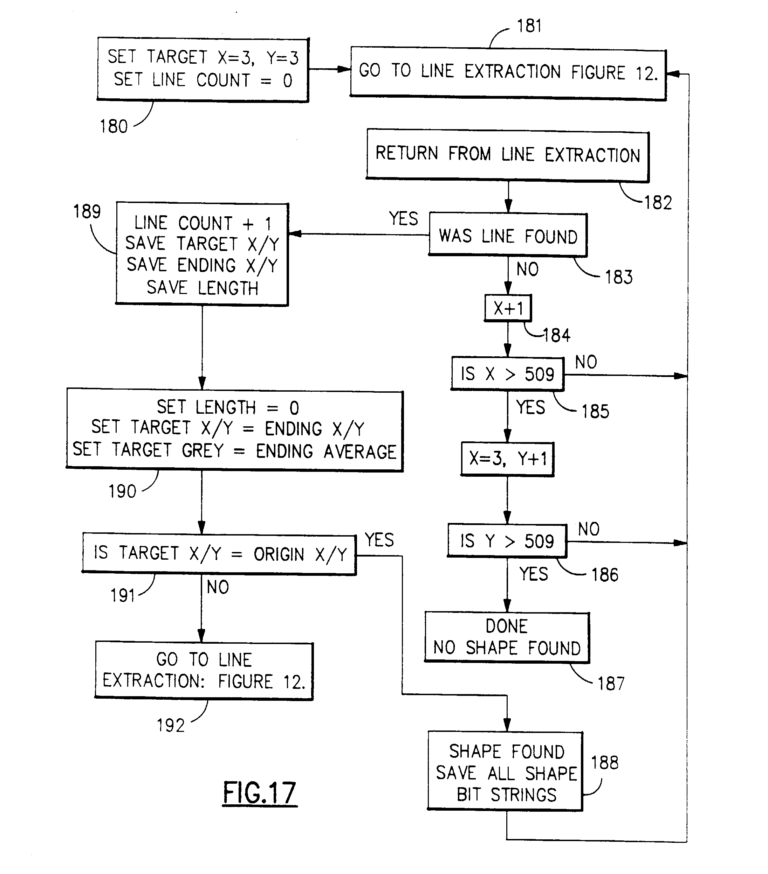

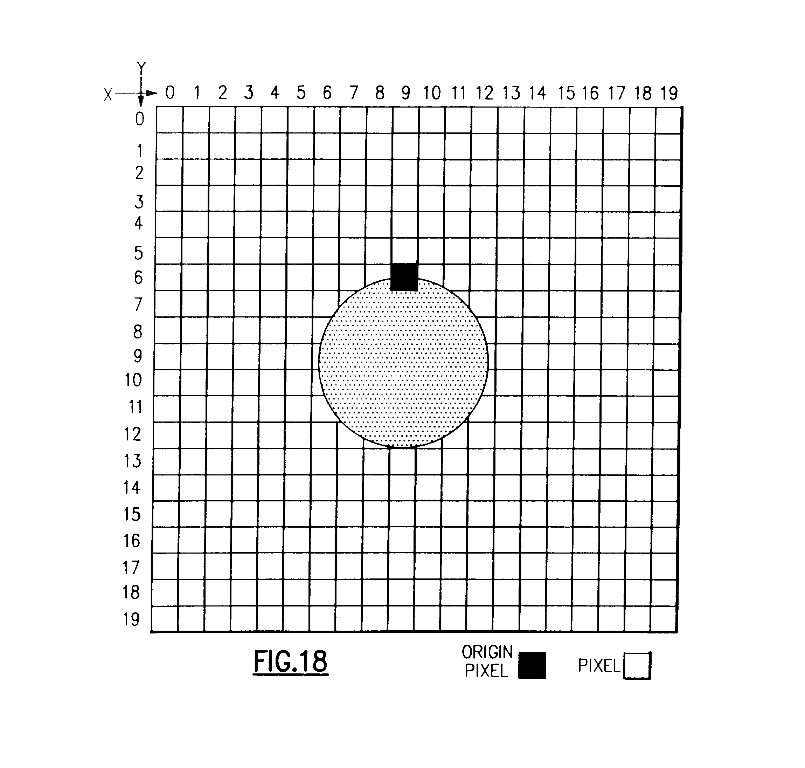

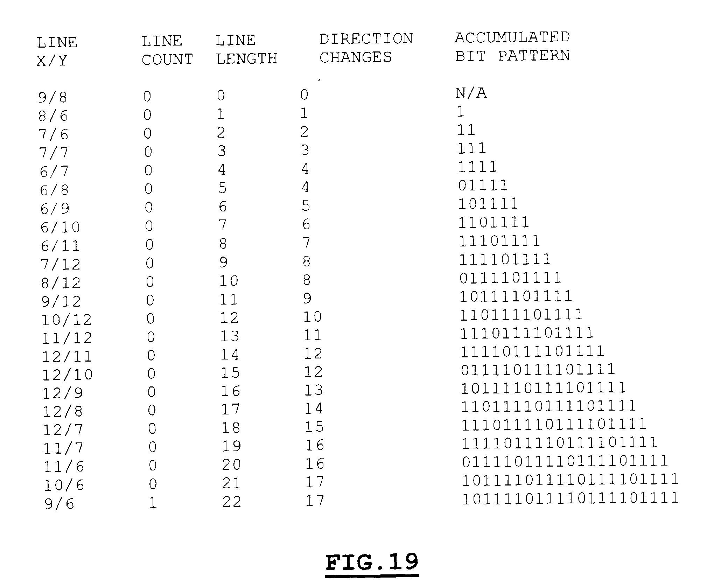

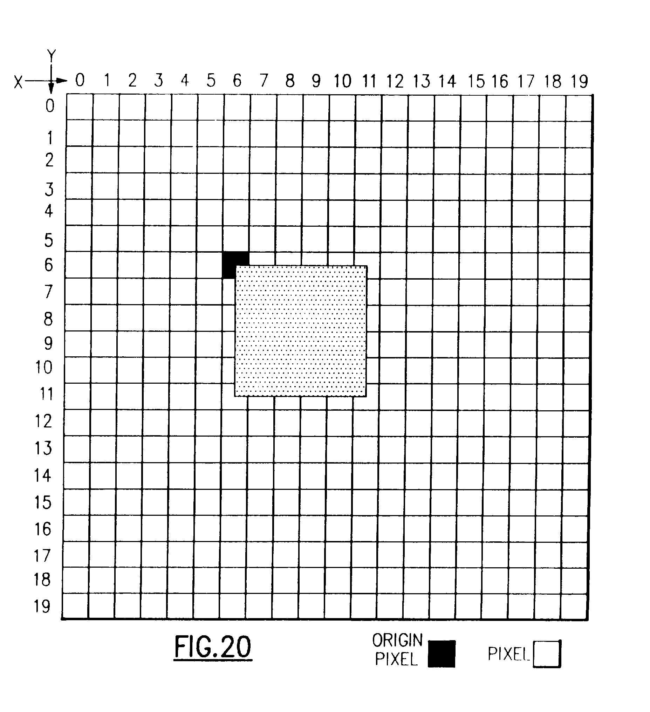

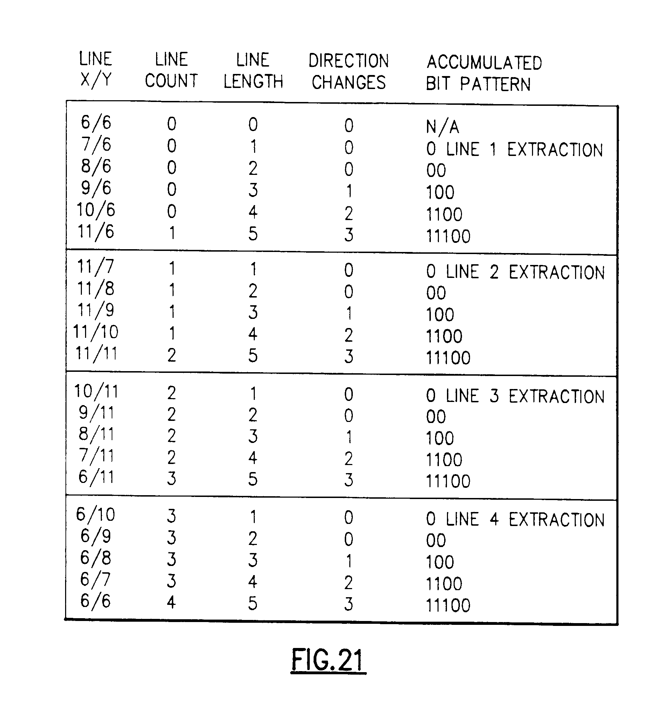

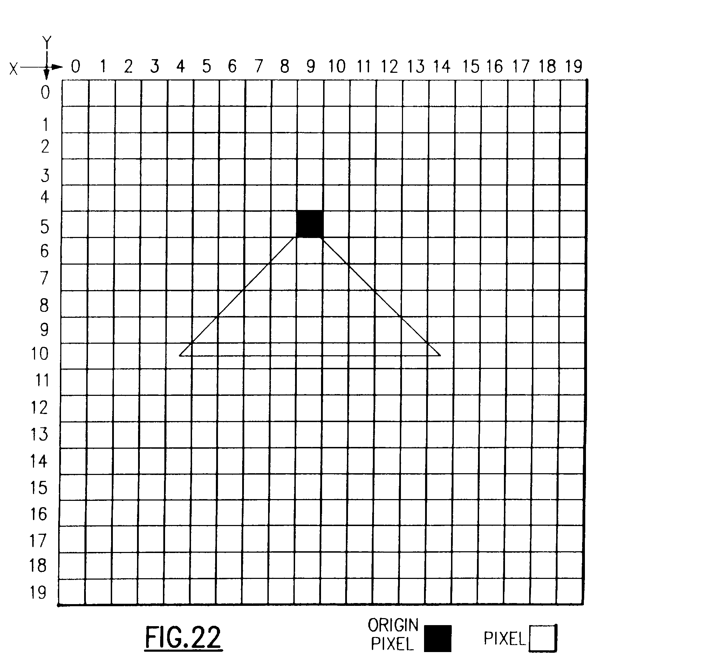

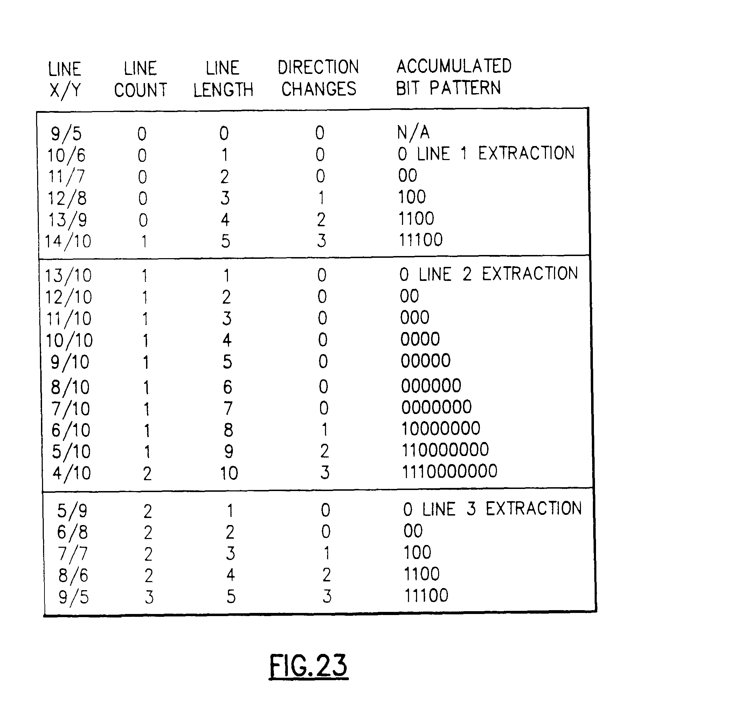

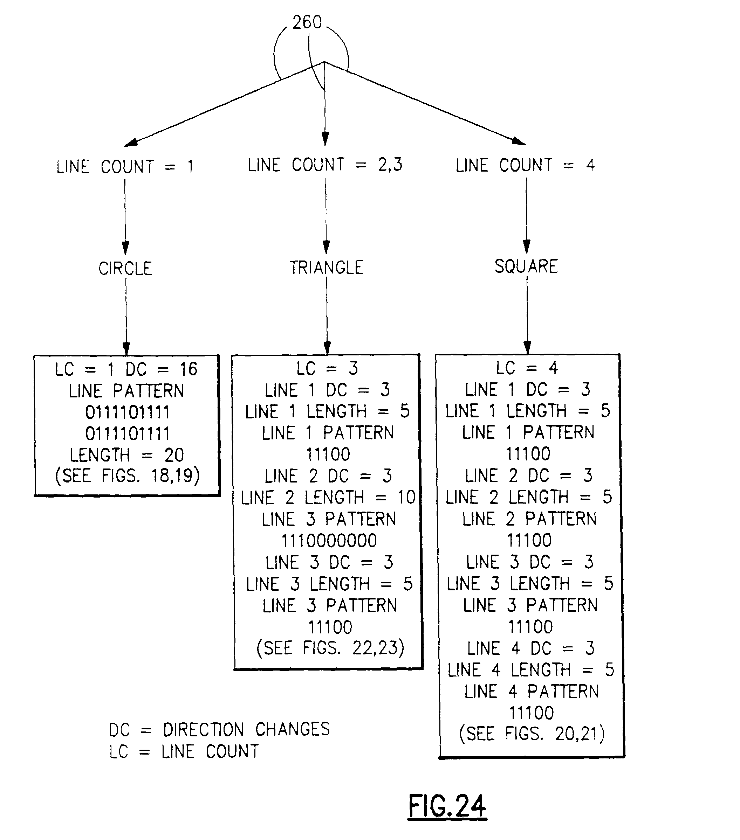

The "Geometric Shape Extraction" algorithm uses the "Line Extraction" algorithm to create a series of bit strings, one for each line contained in the shape, to define the shape being extracted. This is shown in the "Shape Extraction Flow Diagram" in Figure 17 #180-192. A shape is a group of contiguous lines that meet at the point of origin. For example, Figure 18 shows the pixel of origin (colored black) to be also the last pixel in a line which forms a circle. Figure 19, which is the "Circle Shape Calculation Diagram", shows that there is a line count of only one for a circle and also gives the line length and direction changes expected for a circle, which are summed up as the accumulated bit pattern shown in column 5. In like manner, the algorithm can be used to determine other shapes such as a square (see Figure 20), which can be observed to have 4 lines as shown in the "Square Shape Calculation Diagram" in Figure 21; and a triangle (Figure 22), which can be calculated by this algorithm to have 3 lines. This information is shown in the "Triangle Shape Calculation Diagram" in Figure 23. The numbers and bit strings extracted by the "Line Extraction" algorithm describe, in an abstract sense, the characteristics of each line contained in the shape. These numbers and bit strings are appended together to define a shape. For the purpose of high speed comparison candidate searches in a "Knowledge base" using this type of data, a set of composite numbers is calculated and appended to the overall group of numbers and bit strings which define the shape. The composite numbers calculated indicate the number of lines contained in the shape, the size of the shape expressed in pixels, and the total number of changes in directions contained in the shape.

### "GEOMETRIC SHAPE AND PATTERN RECOGNITION"

Using the "Line Extraction" (Figures 12-14) and "Geometric Shape Extraction" (Figure 17) algorithms, a root knowledge base can be generated. This stored knowledge base describes in an abstract sense various geometric shapes and patterns. The knowledge base data is stored in logic tree format based on the line count and the number of direction changes in that order. Figure 24 shows such a knowledge base containing a circle, a rectangle, and a triangle. Each major category of geometric shapes becomes a main branch of the logic tree (Figure 24 #260). The major categories are based on the line count contained in the shape. Minor categories then become minor branches of the major branches based on the number of changes in direction contained in the shape.

Once a geometric shape has been extracted from a target image using the "Geometric Shape Extraction" algorithm, the resultant line count and changes in direction can then be used to search the knowledge tree to select bit pattern match candidates. The size of each candidate or the target, depending on which bit pattern is larger, is adjusted to match the size of the other by removing every N-th bit from the larger of the two. The bit patterns contained in these candidates are then compared on a bit by bit basis with the target image shape extracted. A percentage score is then calculated for each candidate based on the number of bits in the respective bit pattern tables that match. The candidate with the highest score is selected as the best match from the knowledge base and is assumed to be the closest geometric approximation to the target shape.

The instant invention has been shown and described herein in what it is considered to be the most practical and preferred embodiment. It is recognized, however, that departures may be made therefrom within the scope of the invention as defined by the claims and that obvious modifications will occur to a person skilled in the art.

## Claims

1. An image processing method for extracting local pattern information comprising the steps of:
bombarding an irregular surface (3) with a focused beam of ultrasonic energy (2) to obtain a return echo (4) ;
generating a pixel image containing back scatter energy from the echo;
selecting a target pixel relating to a target image to be evaluated;
selecting a first group of pixels (N1-N8) directly surrounding said target pixel;
selecting a second group of pixels (F1-F16) surrounding contiguously said first group of pixels;
assigning one or more radials (10-17) from said target pixel through at least one pixel of said first group and continuously through at least one pixel of said second group;
determining the pixel gray scale values along each radial in group one and group two to determine the number of edges along each radial;
providing a bit string value based on the number of edges in each radial; and
accumulating all of the radial bit string values into an accumulated string of bits relating to the radial shape of the edges.

2. An image processing method according to claim 1, wherein the method further comprises the steps of:
counting the number of "0" bits (37) in each accumulated bit string; and
assigning a numerical value to the resultant "0" bit count relating to the spatial distribution of the edges.

3. An image processing method according to claim 1 or 2 and further including the steps of:
identifying the gray scale pixel values differences on each radial between the target pixels and the edge pixels; and
summing the total absolute gray scale pixel value differences (57) for all radials relating to the target pixel, whereby the resultant total pixel gray scale differential value indicates homogeneity around said target pixel.

4. An image processing method for extracting local pattern information comprising the steps of:
bombarding an irregular surface (3) with a focused beam of ultrasonic energy (2) to obtain a return echo (4) ;
generating a pixel image containing back scatter energy from the echo;
selecting a target pixel relating to a target image to be evaluated;
delineating matched pairs of colinear radials (10-17) originating from said target pixel, each said radial being at least three pixels in length;
determining the gray scale pixel differences between each pair of colinear radials as an absolute numerical value; and
accumulating the total gray scale differences (57) for all radial pairs to ascertain the total gray scale pixel asymmetry surrounding said target pixel relating to the asymmetry of the echo image pattern around the target pixel.

5. An image processing method according to claim 1, further comprising the steps of:
adding the absolute value of gray scale values of at last three pixels along each radial;
determining the difference in total gray scale values between adjacent radials; and
summing the total of the absolute differences in adjacent radial gray scale values to obtain a final accumulated gradient value.

6. A method according to claim 5, wherein the method further comprises the steps of:
searching the accumulated bit strings for a line identification at each pixel location;
examining each line to find out when the target pixel location equals the origin of the line examination; and
continuing the line examination for all pixels until the target initial pixel equals the original line pixel whereby a shape will be extracted.

7. An image processing method for extracting local pattern information comprising the steps of:
bombarding an irregular surface (3) with a focused beam of ultrasonic energy (2) to obtain a return echo (4);
generating a pixel image containing back scatter energy from the echo;
selecting a target pixel relating to target image to be evaluated;
selecting a plurality of target radial pixels emanating from the target pixel;
determining a radial with an average pixel gray scale value within a predetermined value relative to said target pixel gray scale value along said radial;
assigning a bit value to each pixel located in said line as determined along said radial;
locating the end of a line by detecting a change in direction of said line above 89° (152); and
accumulating a bit string for said line evaluation (156).

8. A method according to claim 7, wherein the method further comprises the steps of:
generating a logic tree knowledge (260) based on line count and number of direction changes for recognition of geometric shapes based on the number of changes in direction and shape;
searching the knowledge tree data using resultant line count and changes in direction to select bit pattern match candidates;
adjusting the size of each match candidate by removing every n-th bit from the larger of the two; and
comparing bit patterns on a bit by bit basis with the target shape extracted.

9. An apparatus for the extraction of local pattern recognition information from a pixel image containing back scatter energy produced by a focused beam of energy (radar, sonar, ultrasonic, laser) emitted against a target such as human tissue to extract characteristic information concerning tissue being targeted, the apparatus comprising:
means for generating a beam of ultrasonic energy;
means for evaluating back scatter of said energy from a target as a function of the pixel gray scale values in a visual pixel array;
means for generating a pixel array pattern in X and Y coordinates as a function of back scatter intensity energy received from a specific target illuminated with a focused beam of energy;
means for selecting a target pixel in said image pattern;
means for selecting predetermined radials relative to said target pixel;
means for determining the pixel gray scale values along each radial relative to said target pixel and pixels surrounding said target pixels to determine the number of edges along each radial; and
means for providing bit string values based on the number of edges in each radial and accumulating all the radial bit string values into an accumulated string of bits relating to the radial shape of the edges.

## Patentansprüche

1. Bildverarbeitungsverfahren zur Gewinnung einer lokalen Musterinformation, das folgende Schritte umfaßt:
- Beschuß einer unregelmäßigen Oberfläche (3) mit einem fokussierten Strahl von Ultraschallenergie (2) um ein Echo (4) hervorzurufen;
- Erzeugung eines aus einzelnen Pixeln bestehenden Bildes, das Rückstreuungs-Energie aus dem Echo enthält;
- Auswahl eines Ziel-Pixels, das in Beziehung zu einem auszuwertenden Zielbild steht;
- Auswahl einer ersten Gruppe von Pixeln (N1-N8), die das Ziel-Pixel unmittelbar umgeben;
- Auswahl einer zweiten Gruppe von Pixeln (F1-F16), die die erste Gruppe von Pixeln umgeben und überall an diese angrenzen;
- Festlegung eines oder mehrerer von dem Ziel-Pixel ausgehender Strahlen (10-17), die mindestens ein Pixel der ersten Gruppe und daran anschließend mindestens ein Pixel der zweiten Gruppe durchlaufen;
- Bestimmung der Grautonwerte der Pixel in der ersten Gruppe und in der zweiten Gruppe entlang jeden Strahls zur Bestimmung der Anzahl von Stufen entlang des Strahls.
- Angabe eines Bitfolgenwertes in Abhängigkeit von der Stufenanzahl auf jedem Strahl; und
- Akkumulieren aller Einzelstrahl-Bitfolgenwerte in eine akkumlierte Bitfolge, die in Beziehung zu der radialen Form der Stufen steht.

2. Bildverarbeitungsverfahren nach Anspruch 1, bei dem das Verfahren zusätzlich die folgenden Schritte umfaßt:
- Zählen der "0"-Bits (37) in jeder akkumuierten Bitfolge; und
- Zuweisung eines numerischen Wertes zu der erhaltenen Anzahl von "0"-Bits, der in Beziehung zur räumlichen Verteilung der Stufen steht.

3. Bildverarbeitungsverfahren nach Anspruch 1 oder 2 mit den folgenden zusätzlichen Schritten:
- Bestimmung der Grautonwertdifferenzen zwischen den Ziel-Pixeln und den Stufen-Pixeln auf jedem Strahl; und
- Aufsummierung der gesamten Absolutwerte der Grautonwertdifferenzen (57) aller mit dem Ziel-Pixel in Verbindung stehenden Strahlen, so daß der erhaltene Wert der Summe aller Grautonwertdifferenzen ein Maß für die Homogenität in der Umgebung des Ziel-Pixels darstellt.

4. Bildverarbeitungsverfahren zur Gewinnung einer lokalen Musterinformation, das folgende Schritte umfaßt:
- Beschuß einer unregelmäßigen Oberfläche (3) mit einem fokussierten Strahl von Ultraschallenergie (2), um ein Echo (4) hervorzurufen;
- Erzeugung eines aus einzelnen Pixeln bestehenden Bildes, das Rückstreuungs-Energie aus dem Echo enthält;
- Auswahl eines Ziel-Pixels, das in Beziehung zu einem auszuwertenden Zielbild steht;
- Anreißen von zusammengehörigen Paaren kollinearer Strahlen (10-17), die von dem Ziel-Pixel ausgehen und deren jeweilige Länge mindestens drei Pixel beträgt;
- Bestimmung der Grautonwertdifferenzen zwischen den entsprechenden Pixeln jedes kollinearen Strahlenpaares; als einen numerischen Absolutwert, und
- Aufsummierung der gesamten Grautonwertdifferenzen (57) aller Strahlenpaare zur Bestimmung der Gesamtasymmetrie der Pixel-Grautonwerte in der Umgebung des Ziel-Pixels, die in Beziehung zu der Asymmetrie des Echobildmusters in der Umgebung des Ziel-Pixels steht.

5. Bildverarbeitungsverfahren nach Anspruch 1, das zusätzlich folgende Schritte umfaßt:
- Hinzufügen eines Absolutwertes der addierten Grautonwerte mindestens dreier Pixel entlang jeden Strahls;
- Bestimmung der Differenz zwischen den addierten Grautonwerten benachbarter Strahlen; und
- Aufsummierung der gesamten Absolutwerte der Differenzen benachbarter Strahlen, woraus sich schließlich ein akkumulierter Gradientenwert ergibt.

6. Verfahren nach Anspruch 5, bei dem das Verfahren zusätzlich die folgenden Schritte umfaßt:
- Durchsuchen der akkumulierten Bitfolgen am Ort jedes Pixels zur Linienidentifizierung;
- Untersuchung jeder Linie, um herauszufinden, wann der Ort des Ziel-Pixels mit dem Ursprung der Linienuntersuchung zusammenfällt; und
- Fortsetzung der Linienuntersuchung für alle Pixel, bis das erste Ziel-Pixel gleich dem ursprünglichen Linien-Pixel ist, wodurch dann eine Form gewonnen wird.

7. Bildverarbeitungsverfahren zur Gewinnung einer lokalen Musterinformation, das folgende Schritte umfaßt:
- Beschuß einer unregelmäßigen Oberfläche (3) mit einem fokussierten Strahl von Ultraschallenergie (2) um ein Echo (4) hervorzurufen;
- Erzeugung eines aus einzelnen Pixeln bestehenden Bildes, das Rückstreuungs-Energie aus dem Echo enthält;
- Auswahl eines Ziel-Pixels, das in Beziehung zu einem auszuwertenden Zielbild steht;
- Auswahl einer Vielzahl der von dem Ziel-Pixel strahlförmig ausgehenden, radial angeordneten Ziel-Pixeln;
- Bestimmen eines Strahles mit einem durchschnittlichen Pixel-Grautonwert, der innerhalb eines vorbestimmten Wertebereichs in Bezug auf den Grautonwert des Ziel-Pixels liegt;
- Zuweisen eines Bitwertes zu jedem Pixel das in der auf dem Strahl aufgefundenen Linie liegt;
- Auffinden des Linienendes durch Erfassung einer über 89° hinausgehenden Richtungsänderung (152) der Linie; und
- Akkumulieren einer Bitfolge für die Linienuntersuchung (156).

8. Verfahren nach Anspruch 7, bei dem das Verfahren zusätzlich die folgenden Schritte umfaßt:
- Erstellen einer baumartig verzweigten Wissenstabelle (260) auf der Grundlage der Linienanzahl und der Anzahl der Richtungswechsel zum Zweck der Erkennung geometrischer Formen auf der Grundlage der Anzahl von Änderungen in Richtung und Form;
- Durchsuchen der Wissensbaumstrukturdaten unter Verwendung der erhaltenen Anzahl von Linien und Richtungswechseln zur Auswahl passender Kandidaten für einen Bitmustervergleich;
- Anpassen der Größe jedes Kandidaten für den Vergleich durch Entfernung jedes n-ten Bits des jeweils größeren eines Paares; und
- bitweises Vergleichen der Muster mit der gewonnenen Zielform.

9. Vorrichtung zur Gewinnung einer lokalen Musterinformation aus einem aus Pixeln bestehenden Bild, welches Rückstreuungs-Energie enthält, die dadurch erzeugt ist, daß ein fokussierter Energiestrahl (Radar, Sonar, Ultraschall, Laser) auf ein Zielmedium, beispielsweise menschliches Gewebe, gerichtet ist, um charakteristische Informationen über das bestrahlte Gewebe zu gewinnen, wobei die Vorrichtung folgendes umfaßt:
- Mittel zur Erzeugung eines Strahls von Ultraschallenergie;
- Mittel zur Auswertung der Rückwärtsstreuung dieser Energie von einem Zielobjekt als Funktion der Pixel-Grautonwerte in einer sichtbar gemachten Pixel-Matrix;
- Mittel zur Erzeugung eines Pixel-Matrixmusters in X-und Y-Koordinaten als Funktion der Intensität der von einem bestimmtem, mit einem fokussierten Energiestrahl ausgeleuchtetem Zielobjekt empfangenen Rückstreuungsenergie;
- Mittel zur Auswahl eines Ziel-Pixels in dem Bildmuster;
- Mittel zur Auswahl vordefinierter Strahlen relativ zu dem Ziel-Pixel;
- Mittel zur Bestimmung der Pixel-Grautonwerte auf jedem Strahl, relativ zum Ziel-Pixel und zu den dieses umgebenden Pixeln, um die Anzahl von Stufen auf jedem Strahl zu bestimmen; und
- Mittel zur Erstellung von Bitfolgewerten auf der Grundlage der Anzahl von Stufen auf jedem Strahl und zum Akkumulieren aller Strahl-Bitfolgenwerte in eine akkumulierte Folge von Bits, die in Beziehung zu der radialen Form der Stufen steht.

## Revendications

1. Une méthode de traitement d'image en vue de l'extraction d'informations relatives à un motif local, cette méthode comprenant les étapes consistant à :
- bombarder une surface irrégulière (3) par un faisceau focalisé d'énergie ultrasonique (2) pour obtenir un écho en retour (4) ;
- générer une image en pixels contenant l'énergie de rétro-diffusion provenant de l'écho ;
- sélectionner un pixel relatif à une image cible à évaluer ;
- sélectionner un premier groupe de pixels (N1-N8) entourant directement ledit pixel cible ;
- sélectionner un second groupe de pixels (F1-F16) entourant de façon contiguë ledit premier groupe de pixels ;
- désigner une ou plusieurs radiales (10-17) partant dudit pixel cible passant à travers au moins un pixel dudit premier groupe, et passant de façon continue à travers au moins un pixel dudit second groupe ;
- déterminer les valeurs d'échelles de gris des pixels le long de chaque radiale dans le groupe un et le groupe deux pour déterminer le nombre de bords le long de chaque radiale ;
- fournir une valeur de chaîne de bits basée sur le nombre de bords de chaque radiale ; et
- accumuler les valeurs de chaînes de bits de toutes les radiales en une chaîne de bits cumulée relative à la forme radiale des bords.

2. Une méthode de traitement d'image selon la revendication 1, dans laquelle ladite méthode comprend au surplus les étapes consistant à :
- compter le nombre de bits "0" (37) dans chaque chaîne de bits cumulée ; et
- attribuer une valeur numérique au décompte de bits "0" résultant, relative à la répartition spatiale des bords.

3. Une méthode de traitement d'image selon la revendication 1 ou 2, et comprenant au surplus les étapes consistant à:
- identifier les différences de valeurs d'échelles de gris des pixels sur chaque radiale entre le pixel cible et les pixels de bords ; et
- faire la somme des différences absolues totales des valeurs d'échelles de gris des pixels (57) pour toutes les radiales relatives au pixel cible, la valeur différentielle totale résultante d'échelle de gris des pixels indiquant l'homogénéité autour dudit pixel cible.

4. Une méthode de traitement d'image en vue de l'extraction d'informations sur un motif local, cette méthode comprenant les étapes consistant à :
- bombarder une surface irrégulière (3) par un faisceau focalisé d'énergie ultrasonique (2) pour obtenir un écho en retour (4) ;
- générer une image en pixels contenant l'énergie de rétro-diffusion provenant de l'écho ;
- sélectionner un pixel cible relatif à une image cible à évaluer ;
- délinéer des paires assorties de radiales colinéaires (10-17) commençant audit pixel cible, chacune desdites radiales ayant une longueur d'au moins trois pixels ;
- déterminer les différences d'échelles de gris des pixels entre chaque paire de radiales colinéaires sous forme d'une valeur numérique absolue ; et
- accumuler les différences totales d'échelles de gris (57) pour toutes les paires de radiales pour déterminer l'asymétrie totale des échelles de gris des pixels entourant ledit pixel cible, correspondant à l'asymétrie du motif de l'image écho autour du pixel cible.

5. Une méthode de traitement d'image selon la revendication 1, comprenant au surplus les étapes consistant à :
- additionner les caleurs absolues des valeurs d'échelles de gris d'au moins trois pixels le long de chaque radiale ;
- déterminer la différence des valeurs totales d'échelles de gris entre des radiales adjacentes ; et
- faire la somme des différences absolues des valeurs d'échelles de gris dans les radiales adjacentes pour obtenir une valeur finale de gradient cumulée.

6. Une méthode selon la revendication 5, dans laquelle la méthode comprend au surplus les étapes consistant à :
- procéder à la recherche des chaînes de bits cumulées en vue de l'identification de lignes à chaque emplacement de pixel ;
- examiner chaque ligne en vue de savoir quand l'emplacement du pixel cible se confond avec l'origine de l'examen de lignes ; et
- poursuivre l'examen de lignes pour tous les pixels jusqu'à ce que le pixel cible initial soit confondu avec le pixel de commencement de ligne, à la suite de quoi est extraite une forme.

7. Une méthode de traitement d'image en vue de l'extraction d'informations relatives à un motif local, cette méthode comprenant les étapes consistant à :
- bombarder une surface irrégulière (3) par un faisceau focalisé d'énergie ultrasonique (2) pour obtenir un écho en retour (4) ;
- générer une image en pixels contenant l'énergie de rétro-diffusion provenant de l'écho ;
- sélectionner un pixel cible relatif à l'image cible à évaluer ;
- sélectionner une pluralité de pixels cibles radiaux émanant du pixel cible;
- déterminer une radiale ayant une valeur moyenne d'échelle de gris située dans une valeur prédéterminée par rapport à la valeur d'échelle de gris dudit pixel cible le long de ladite radiale;
- attribuer une valeur de bit à chaque pixel situé dans ladite ligne comme déterminé le long de ladite radiale ;
- localiser l'extrémité d'une ligne, par détection d'un changement de direction de ladite ligne supérieur à 89° (152) ; et
- accumuler une chaîne de bits en vue de l'évaluation de ladite ligne (156).

8. Une méthode selon la revendication 7, dans laquelle la méthode comprend au surplus les étapes consistant à :
- générer un arbre logique de connaissances (260) basé sur le décompte de lignes et le nombre de changements de direction en vue de la reconnaissance de formes géométriques basée sur le nombre de changements de direction et de forme ;
- procéder à une recherche dans les données de l'arbre de connaissances en utilisant le décompte de lignes et les changements de direction résultants pour sélectionner les candidats assortis au motif de bits ;
- ajuster la taille de chaque candidat assorti en éliminant tout n-ième bit du plus grand des deux ; et
- comparer les motifs de bits sur la base de bit à bit avec la forme cible extraite.

9. Un appareillage pour l'extraction d'informations relatives à la reconnaissance d'un motif local à partir d'une image en pixels contenant l'énergie de rétro-diffusion produite par un faisceau focalisé d'énergie (radar, sonar, ultrasonique, laser) émise vers une cible telle qu'un tissu humain, en vue d'extraire des informations caractéristiques concernant le tissu pris pour cible, cet appareillage comprenant:
- des moyens pour générer un faisceau d'énergie ultrasonique;
- des moyens pour évaluer la rétro-diffusion de ladite énergie depuis une cible en fonction des valeurs d'échelles de gris dans une série visuelle de pixels;
- des moyens pour générer un motif en série de pixels dans des coordonnées X et Y sous forme d'une fonction de l'énergie de l'intensité de rétro-diffusion reçue depuis une cible spécifique illuminée par un faisceau focalisé d'énergie ;
- des moyens pour sélectionner un pixel cible dans ce motif image;
- des moyens pour sélectionner des radiales prédéterminées relatives audit pixel cible;
- des moyens pour déterminer les valeurs d'échelles de gris le long de chaque radiale relative audit pixel cible et aux pixels entourant ledit pixel cible en vue de déterminer le nombre de bords le long de chaque radiale; et
- des moyens pour fournir des valeurs de chaînes de bits basées sur le nombre de bords dans chaque radiale et pour accumuler les valeurs de chaînes de bits pour toutes les radiales en une chaîne de bits cumulée relative à la forme radiale des bords.
